# EUROPÄISCHE PATENTSCHRIFT

(11) **EP 3 869 946 B1**
(45) Veröffentlichungstag und Bekanntmachung des Hinweises auf die Patenterteilung: **13.03.2024**
(21) Anmeldenummer: 19794464.8
(22) Anmeldetag: 21.10.2019
(51) Int. Cl.: A01K 11/00, A01K 47/06, A01K 49/00

(54) **VORRICHTUNG UND VERFAHREN ZUR STEUERUNG EINER FLUGÖFFNUNG EINER BIENENBEUTE**
DEVICE AND METHOD FOR CONTROLLING A FLIGHT OPENING OF A BEEHIVE BOX
DISPOSITIF ET PROCÉDÉ DE COMMANDE D'UNE OUVERTURE DE VOL D'UNE RUCHE

(30) Priorität: 22.10.2018 DE 102018126176
(43) Veröffentlichungstag der Anmeldung: 01.09.2021
(73) Patentinhaber: Micro-Sensys GmbH, 99098 Erfurt (DE)
(72) Erfinder: JURISCH, Reinhard, 99438 Meckfeld bei Bad Berka (DE); PEITSCH, Peter, 99099 Erfurt (DE); TAUTZ, Jürgen, 97295 Waldbrunn (DE); JÄGER, Sylvo, 99098 Erfurt (DE)
(74) Vertreter: Liedtke & Partner Patentanwälte
(86) Internationale Anmeldenummer: PCT/EP2019/078566
(87) Internationale Veröffentlichungsnummer: WO 2020/083832

(56) Entgegenhaltungen:
- WO-A1-2015/166292
- WO-A2-2016/120649
- CZ-A3- 201 757
- US-A1- 2007 207 701

## Beschreibung

Die Erfindung betrifft eine Vorrichtung zur Steuerung einer Flugöffnung einer Bienenbeute nach den Merkmalen des Oberbegriffs des Anspruchs 1 und ein Verfahren zur Steuerung einer Flugöffnung einer Bienenbeute.

Aus dem Stand der Technik ist es allgemein bekannt, die Flugöffnung eine Bienenbeute eines Bienenstocks manuell zu verschließen, um beispielsweise während eines Transports des Bienenstocks das Ausfliegen der Bienen aus der Bienenbeute zu verhindern.

In der US 2007/0207701 A1 wird ein System zum Nachweis der Anwesenheit einer Bienenkönigin in einem Bienenstock beschrieben. Das System enthält ein an der Bienenkönigin befestigtes RFID-Tag und eine RFID-Erkennungsvorrichtung, die neben der Stocköffnung befestigt ist und eine Ausgabe sendet, die das Vorhandensein oder Fehlen der Bienenkönigin anzeigt.

Aus der WO 2016/120649 A2 ist eine Einheit zum Steuern des Schwärmens von Honigbienen bekannt. Die Einheit besteht aus Metall, Holz und/oder Kunststoff und kann am Bienenstock montiert und von diesem gelöst werden. Sie umfasst mindestens eine Königinfalle, mindestens ein bewegliches Tor und Eingänge nur für die Arbeiterinnen. Die Einheit umfasst des Weiteren mindestens einen integrierten Sensor zum Erkennen der schwarmspezifischen Ansammlung von Bienen auf der und um die Königinfalle oder des Vorhandenseins der zuvor markierten Königin. Die Einheit umfasst zudem eine mit dem Sensor verbundene Steuereinheit, welche das bewegliche Tor bei Erkennen des Schwärmens in Betrieb setzt und verhindert, dass die schwärmenden Bienen in die Bienenbeute zurückkehren. Die Einheit öffnet für die Bienen, die die Bienenbeute verlassen möchten, einen integrierten Teilungstunnel, der bis zum Schwärmen geschlossen ist. Dieser Teilungstunnel führt die Bienen nach dem Schwärmen zum Auslass des Teilungstunnels, der an einer von den Eingängen beabstandeten Stelle angeordnet ist. Durch Ändern der Geometrie des Auslasses des Teilungstunnels orientieren sich die Bienen, die von der Bienenbeute in die Einheit gelangen, instinktiv zum Auslass des Teilungstunnels. Diese Teilung kann nach dem Schwärmen wiederholt durchgeführt werden, bis die Elternkolonie ihren Schwärmimpuls verliert.

In der WO 2015/166292 A1 wird eine Vorrichtung zur Steuerung des Eiablageprozesses der Bienenkönigin beschrieben. Die Vorrichtung erkennt die zuvor mit lichtreaktiven Pigmenten markierte Bienenkönigin durch einen dem Markierungsverfahren entsprechenden Sensor. Der Sensor ist mit einer Steuereinheit verbunden, die bei Erkennen der Bienenkönigin bewegliche Tore, die mit der Vorrichtung verbunden sind, durch Starten eines Motors bewegt. Die Vorrichtung mit ihren Seitenwänden kann direkt auf die Bienenwabe aufgesetzt werden und der Erfassungsbereich des Sensors fällt in den von den Seitenwänden flankierten Bereich. Die markierte Bienenkönigin gelangt unkontrolliert zur Vorrichtung. Wenn sie erkannt wird, schließen sich die beweglichen Tore und verhindern, dass die Bienenkönigin hindurchkommt. Da nach dem Schließen der Tore der Platz für die Bienenkönigin begrenzt ist, wird die Bienenkönigin in Kürze gezwungen sein, die Vorrichtung in der vorgegebenen Führungsrichtung durch eine Öffnung zu verlassen. Die Vorrichtung umfasst auch einen Zaun und eine Trennwand, die teilweise oder vollständig eine Königinnenausschlusseinheit beinhalten und die Bienenkönigin für den erforderlichen Zeitraum einschließen, während der Zaun und die Trennwand die Arbeiterinnen nicht an der Durchtritt hindern.

Der Erfindung liegt die Aufgabe zu Grunde, eine gegenüber dem Stand der Technik verbesserte Vorrichtung und ein gegenüber dem Stand der Technik verbessertes Verfahren zur Steuerung einer Flugöffnung einer Bienenbeute anzugeben.

Die Aufgabe wird erfindungsgemäß gelöst durch eine Vorrichtung zur Steuerung einer Flugöffnung einer Bienenbeute mit den Merkmalen des Anspruchs 1 und ein Verfahren zur Steuerung einer Flugöffnung einer Bienenbeute mit den Merkmalen des Anspruchs 9.

Vorteilhafte Ausgestaltungen der Erfindung sind Gegenstand der Unteransprüche.

Eine Vorrichtung zur Steuerung einer Flugöffnung einer Bienenbeute eines Bienenstocks umfasst ein beispielsweise als eine Klappe ausgebildetes Verschlusselement zum zumindest teilweisen Verschließen der Flugöffnung. Die Bienenbeute, welche umgangssprachlich auch als Bienenstock bezeichnet wird, ist eine künstliche Behausung für ein Bienenvolk, während der Bienenstock die Gesamtheit aus Bienenvolk und Bienenbeute bezeichnet.

Erfindungsgemäß umfasst die Vorrichtung mindestens eine an einer Bienenkönigin anordbare oder angeordnete Identifikationseinheit, eine Ausleseeinheit zum Auslesen der mindestens einen Identifikationseinheit, wobei die Ausleseeinheit oder zumindest eine Antenneneinheit der Ausleseeinheit an der Flugöffnung anordbar oder angeordnet ist, und eine Betätigungseinheit zum Betätigen des Verschlusselementes. Diese Betätigungseinheit ist vorteilhafterweise mit der Ausleseeinheit gekoppelt.

Eine Bienenbeute umfasst vorteilhafterweise eine solche Vorrichtung. Insbesondere ist die Ausleseeinheit oder zumindest die Antenneneinheit der Ausleseeinheit an der Flugöffnung angeordnet, das Verschlusselement an der Flugöffnung angeordnet, insbesondere in einer geöffneten oder geschlossenen Stellung, und die Betätigungseinheit zum Betätigen des Verschlusselementes, welche insbesondere mit der Ausleseeinheit gekoppelt ist, ist vorgesehen. Vorteilhafterweise ist auch die mindestens eine Identifikationseinheit vorgesehen und an der Bienenkönigin anordbar oder angeordnet.

Ein Bienenstock umfasst vorteilhafterweise eine solche Vorrichtung. Insbesondere ist die Ausleseeinheit oder zumindest die Antenneneinheit der Ausleseeinheit an der Flugöffnung der Bienenbeute angeordnet, das Verschlusselement ist an der Flugöffnung der Bienenbeute angeordnet, insbesondere in einer geöffneten oder geschlossenen Stellung, und die Betätigungseinheit zum Betätigen des Verschlusselementes, welche insbesondere mit der Ausleseeinheit gekoppelt ist, ist vorgesehen.

An mindestens einer Bienenkönigin des Bienenstocks ist eine Identifikationseinheit angeordnet.

In einem erfindungsgemäßen Verfahren zur Steuerung der Flugöffnung der Bienenbeute, insbesondere mittels dieser Vorrichtung und/oder mittels der Bienenbeute und/oder mittels des Bienenstocks, wird mittels der Ausleseeinheit, welche an der Flugöffnung angeordnet ist oder welche zumindest eine Antenneneinheit aufweist, die an der Flugöffnung angeordnet ist, die an der Bienenkönigin angeordnete Identifikationseinheit ausgelesen. Dies ist nur möglich, wenn sich die Bienenkönigin im Inneren, d. h. in einem Innenraum, der Bienenbeute im Umgebungsbereich der Flugöffnung und somit im Erfassungsbereich der Ausleseeinheit befindet. Durch dieses Auslesen der Identifikationseinheit wird somit ermittelt, dass sich die Bienenkönigin im Inneren der Bienenbeute im Umgebungsbereich der Flugöffnung befindet und somit die Gefahr besteht, dass die Bienenkönigin die Bienenbeute verlässt. Daraufhin wird das Verschlusselement durch Betätigen mittels des Betätigungselementes in die geschlossene Stellung bewegt, wodurch verhindert wird, dass die Bienenkönigin die Bienenbeute verlässt. Das Aktivieren des Betätigungselementes und somit das Betätigen und dadurch Bewegen des Verschlusselementes in die geschlossene Stellung wird dabei vorteilhafterweise durch die Ausleseeinheit ausgelöst, welche hierzu vorteilhafterweise mit dem Betätigungselement gekoppelt ist, wie oben bereits beschrieben.

Die erfindungsgemäße Lösung ermöglicht das eindeutige und vollautomatische Erkennen der mindestens einen die Identifikationseinheit aufweisenden Bienenkönigin oder mehrerer jeweils eine Identifikationseinheit aufweisender Bienenköniginnen, wenn sie sich im inneren Flugöffnungsbereich, d. h. im Umgebungsbereich der Flugöffnung im Inneren der Bienenbeute, befindet/befinden, und daraufhin ein, insbesondere stressfreies, Verhindern des Verlassens der Bienenbeute. Die erfindungsgemäße Lösung ermöglicht somit, insbesondere in Verbindung mit der Bienenbeute, das Ausbilden einer Bienenköniginnenfalle, durch welche ein Entweichen der Bienenkönigin aus der Bienenbeute und somit aus dem Bienenstock sicher verhindert werden kann.

Vorteilhafterweise ist die mindestens eine Identifikationseinheit als ein RFID-Transponder ausgebildet, auch als RFID-Tag bezeichnet, und die Ausleseeinheit ist als eine RFID-Leseeinheit ausgebildet, auch als RFID-Reader bezeichnet. Der Begriff RFID steht dabei für "radio-frequency identification" und bezeichnet ein auf elektromagnetischen Wellen basierendes drahtloses Datenübertragungsverfahren, d. h. ein funkbasiertes Datenübertragungsverfahren, für welches ein RFID-Transponder und eine RFID-Leseeinheit erforderlich ist. Der RFID-Transponder wird dabei durch an ihn vom RFID-Lesegerät übermittelte Funksignale angesprochen. Er antwortet üblicherweise durch Übertragung eines eindeutigen Identifikationscodes und gegebenenfalls weiterer Informationen. Über den eindeutigen Identifikationscode ist das Objekt, an welchem der jeweilige Transponder befestigt ist, hier die Bienenkönigin, eindeutig identifizierbar und beispielsweise weitere vom RFID-Transponder übertragene Informationen sind dem jeweiligen Objekt eindeutig zuzuordnen. Für die hier beschriebene Lösung können beispielsweise alle üblichen RFID-Übertragungsfrequenzen verwendet werden, d. h. LF (Low Frequency), HF (High Frequency) und UHF (Ultra-High-Frequency).

Die Ausleseeinheit umfasst beispielsweise mindestens eine RFID-Antenneneinheit mit mindestens einer RFID-Antenne oder mit mehreren, insbesondere zwei, RFID-Antennen, eine RFID-Leseelektronikeinheit und einen Controller, insbesondere zur Signalaufbereitung. Dadurch wird insbesondere eine sichere und individuelle Erkennung der Bienenkönigin oder der jeweiligen Bienenkönigin ermöglicht. Beispielsweise kann jede Bienenkönigin, genauer gesagt deren jeweiliger RFID-Transponder, einen eigenständigen unikaten, d. h. insbesondere eindeutigen, Identifikationscode, beispielsweise eine Nummer oder Bezeichnung, erhalten. Dieser Identifikationscode kann beispielsweise auch zu einem Bienenzüchter und/oder in eine Datenbank übertragen werden. Insbesondere ist dadurch auch die Möglichkeit der Schaffung einer weltweiten eindeutigen Registrierung und Identifikation der Bienenköniginnen gegeben.

Der Identifikationscode der Bienenkönigin oder der jeweilige Identifikationscode der jeweiligen Bienenkönigin, genauer gesagt von deren jeweiliger, insbesondere als RFID-Transponder ausgebildeter, Identifikationseinheit, ist vorteilhafterweise in der, insbesondere als RFID-Leseeinheit ausgebildeten, Ausleseeinheit gespeichert, insbesondere in einem Vergleichsspeicher. D. h. die Ausleseeinheit weist insbesondere einen solchen Vergleichsspeicher auf oder ist mit einem solchen gekoppelt, insbesondere direkt gekoppelt, insbesondere kabelgebunden gekoppelt, wobei im Vergleichsspeicher ein Identifikationscode mindestens einer Identifikationseinheit speicherbar oder gespeichert ist. Zur Entscheidung über die Betätigung des Verschlusselements ist somit insbesondere keine Datenkommunikation mit einer externen Komponente notwendig. Im Verfahren wird dann vorteilhafterweise aus der Identifikationseinheit der Bienenkönigin der Identifikationscode ausgelesen und mit einem oder mehreren im Vergleichsspeicher gespeicherten Identifikationscodes verglichen, wobei vorteilhafterweise ein erfolgreiches Auslesen der Identifikationseinheit, welches zum Bewegen des Verschlusselementes in die geschlossene Stellung durch Betätigen mittels des Betätigungselementes führt, nur dann vorliegt, wenn der aus der Identifikationseinheit ausgelesene Identifikationscode mit dem im Vergleichsspeicher gespeicherten Identifikationscode oder mit einem der im Vergleichsspeicher gespeicherten Identifikationscodes übereinstimmt. Dadurch wird bei einer sich im inneren Flugöffnungsbereich befindenden erfassten und ausgelesenen als RFID-Transponder ausgebildeten Identifikationseinheit innerhalb einer sehr kurzen Zeit von beispielsweise wenigen Millisekunden ein Vergleich mit dem gespeicherten Identifikationscode oder mit den gespeicherten Identifikationscodes ermöglicht, wodurch die jeweilige Bienenkönigin und deren Anwesenheit im inneren Flugöffnungsbereich entsprechend schnell erfasst werden kann. D. h. der aus der sich im Erfassungsbereich befindenden Identifikationseinheit ausgelesene Identifikationscode wird mit dem im Vergleichsspeicher gespeicherten Identifikationscode oder mit den im Vergleichsspeicher gespeicherten Identifikationscodes verglichen. Liegt eine Übereinstimmung des ausgelesenen Identifikationscode mit dem im Vergleichsspeicher gespeicherten Identifikationscode oder mit einem der im Vergleichsspeicher gespeicherten Identifikationscodes vor, wird das Verschlusselement mittels der Betätigungseinheit, welche vorteilhafterweise durch die Ausleseeinheit aktiviert wird, betätigt und dadurch das Verschlusselement in die geschlossene Stellung bewegt.

Die beschriebene Lösung, insbesondere basierend auf RFID, ermöglicht eine individuelle automatische Erkennung der Bienenkönigin oder der jeweiligen Bienenkönigin und eine entsprechende Reaktion, insbesondere in Form des Bewegens des Verschlusselementes in die geschlossene Stellung. Da die Erfassung der Bienenkönigin im inneren Flugöffnungsbereich erfolgt, kann die Ausleseeinheit und/oder deren Antenneneinheit derart angeordnet werden, dass die Erfassung der Bienenkönigin, genauer gesagt ihrer Identifikationseinheit, nicht durch Schmutz und andere Umweltbedingungen beeinträchtigt ist.

Vorteilhafterweise ist die Antenneneinheit, umfassend mindestens eine Antenne, insbesondere RFID-Antenne, oder mehrere, insbesondere zwei, Antennen, insbesondere RFID-Antennen, der Ausleseeinheit derart ausgerichtet, dass sich ein Erfassungsbereich der Antenneneinheit auf den Umgebungsbereich der Flugöffnung im Inneren der Bienenbeute erstreckt, insbesondere ausschließlich darauf erstreckt. Dadurch wird sichergestellt, dass erfasst wird, wenn die Bienenkönigin in diesen Erfassungsbereich und somit in den Umgebungsbereich der Flugöffnung im Inneren der Bienenbeute eindringt, und nur dann, insbesondere genau dann, zuverlässig das Verschlusselement in die geschlossene Stellung bewegt wird. Dadurch wird zuverlässig und stressfrei verhindert, dass die Bienenkönigin die Bienenbeute verlässt.

Vorteilhafterweise weist die Antenneneinheit mindestens zwei Antennen auf, welche derart ausrichtbar oder ausgerichtet sind, dass die Erfassungsbereiche der Antennen, insbesondere eine in Richtung des Inneren der Bienenbeute gerichtete jeweilige Grenze der Erfassungsbereiche, einen unterschiedlichen Abstand zur Flugöffnung im Inneren der Bienenbeute aufweisen. Im Verfahren wird dann, wie oben bereits beschrieben, mittels der Ausleseeinheit die an der Bienenkönigin angeordnete Identifikationseinheit ausgelesen, wenn sich diese Bienenkönigin im Inneren der Bienenbeute im Umgebungsbereich der Flugöffnung befindet, und daraufhin, jedoch erst dann, wenn die an der Bienenkönigin angeordnete Identifikationseinheit zuerst mittels der, insbesondere ersten, Antenne ausgelesen wird, deren Erfassungsbereich, insbesondere dessen in das Innere der Bienenbeute gerichtete Grenze, den größeren Abstand zur Flugöffnung aufweist, und danach mittels der, insbesondere zweiten, Antenne ausgelesen wird, deren Erfassungsbereich, insbesondere dessen in das Innere der Bienenbeute gerichtete Grenze, den kleineren Abstand zur Flugöffnung aufweist, wird das Verschlusselement durch Betätigen mittels des Betätigungselementes in die geschlossene Stellung bewegt. D. h. das Auslesen der an der Bienenkönigin angeordnete Identifikationseinheit mittels der Ausleseeinheit, woraufhin das Verschlusselement durch Betätigen mittels des Betätigungselementes in die geschlossene Stellung bewegt wird, setzt hier nicht nur ein einziges Auslesen über lediglich eine Antenne der Antenneneinheit voraus, sondern setzt ein mehrfaches, insbesondere doppeltes, Auslesen über mehrere, insbesondere zwei Antennen nacheinander, nämlich ein Auslesen zuerst mittels der ersten Antenne und danach mittels der zweiten Antenne, voraus. Durch diese beiden Antennen, die im Inneren der Bienenbeute einen abgestuften Bereich um die Flugöffnung herum abdecken, wird eine Erhöhung der Erfassungssicherheit und -qualität erreicht. Insbesondere wird es dadurch ermöglicht, die Bewegungsrichtung der Bienenkönigin zu erkennen, insbesondere zu erkennen, ob sich die Bienenkönigin tatsächlich der Flugöffnung annähert, insbesondere derart stark annähert, dass die Gefahr besteht, dass die Bienenkönigin die Bienenbeute verlässt. Beispielsweise wird dann, wenn die an der Bienenkönigin angeordnete Identifikationseinheit mittels der ersten Antenne ausgelesen wird, die Vorrichtung bereits für das Schließen des Verschlusselementes vorbereitet, und dann, wenn die an der Bienenkönigin angeordnete Identifikationseinheit mittels der zweiten Antenne ausgelesen wird, wird das Verschlusselement in die geschlossene Stellung bewegt.

Der Erfassungsbereich ist dabei, insbesondere durch eine entsprechende Ausbildung, Einrichtung und Anordnung der Antenneneinheit, derart ausgebildet, dass ein Zeitraum von einem ersten Erfassen der Bienenkönigin, genauer gesagt von deren insbesondere als RFID-Transponder ausgebildeter Identifikationseinheit, bis zum Eintreffen des Verschlusselementes in der geschlossenen Stellung mindestens so groß ist, dass eine stressfreie Verhinderung des Verlassens der Bienenbeute durch die Bienenkönigin sichergestellt ist. Dieser Zeitraum und somit die Ausbildung des Erfassungsbereichs der Antenneneinheit oder der Erfassungsbereiche der Antennen, insbesondere der ersten Antenne, der Antenneneinheit, insbesondere wie weit dieser ausgehend von der Flugöffnung in das Innere der Bienenbeute reichen muss, um die Bienenkönigin, genauer gesagt deren Identifikationseinheit, rechtzeitig zu erfassen, errechnet sich dabei aus einer maximal benötigten Erfassungs- und Vergleichszeit multipliziert mit einer Bewegungsgeschwindigkeit der Bienenkönigin in der Bienenbeute, insbesondere im Bienenstock. Für diese Bewegungsgeschwindigkeit wird beispielsweise eine maximal mögliche oder eine durchschnittliche Bewegungsgeschwindigkeit von Bienenköniginnen in Bienenbeuten, insbesondere in Bienenstöcken, verwendet. Der Erfassungsbereich der Antenneneinheit, insbesondere der ersten Antenne der Antenneneinheit, der sich bei zwei Antennen weiter in das Innere der Bienenbeute erstreckt, erstreckt sich, ausgehend von der Flugöffnung, insbesondere ausgehend vom in der verschlossenen Stellung positionierten Verschlusselement, beispielsweise 3 cm bis 5 cm in das Innere der Bienenbeute hinein. Die Antenneneinheit ist vorteilhafterweise derart ausgebildet, eingerichtet und angeordnet, dass ein derartiger Umgebungsbereich der Flugöffnung mit ihrem Erfassungsbereich, insbesondere mit dem Erfassungsbereich der ersten Antenne der Antenneneinheit, abgedeckt wird. Vorteilhafterweise ist der Erfassungsbereich nicht oder nicht wesentlich größer, d. h. er erstreckt sich insbesondere nicht weiter oder nicht wesentlich weiter in die Bienenbeute hinein, um ein unnötiges Verschließen der Flugöffnung zu vermeiden.

In einer möglichen Ausführungsform umfasst die Vorrichtung eine Arretiereinheit zur Arretierung des Verschlusselements in der geschlossenen Stellung. Im Verfahren wird entsprechend das Verschlusselement in der geschlossenen Stellung vorteilhafterweise mittels der Arretiereinheit arretiert. Dadurch wird verhindert, dass die Bienenkönigin das beispielsweise als Klappe ausgebildete Verschlusselement selbst öffnet und die Bienenbeute verlässt.

In einer möglichen Ausführungsform umfasst die Vorrichtung eine Verschlusselementpositionserfassungseinheit, mittels welcher eine aktuelle Position des Verschlusselementes ermittelbar ist oder zumindest ermittelbar ist, ob sich das Verschlusselement in der geöffneten oder geschlossenen Stellung befindet oder zumindest ermittelbar ist, ob sich das Verschlusselement in der geschlossenen Stellung befindet oder nicht. Im Verfahren wird somit beispielsweise mittels der Verschlusselementpositionserfassungseinheit erfasst, wenn sich das Verschlusselement in der geschlossenen Stellung befindet. Dadurch kann überprüft werden, ob die Bienenbeute für die Bienenkönigin sicher verschlossen ist, so dass deren Entweichen aus der Bienenbeute und somit aus dem Bienenstock sicher verhindert ist.

Vorteilhafterweise umfasst die Vorrichtung eine Alarmeinheit, auch als Alarm- und Informationseinheit bezeichnet, zur Generierung einer Alarmmeldung bei erfolgtem, insbesondere erfolgreichem, Auslesen der mindestens einen Identifikationseinheit, d. h. insbesondere bei erfolgtem Auslesen des korrekten Identifikationscodes, welcher mit dem im Vergleichsspeicher gespeicherten Identifikationscode oder mit einem der im Vergleichsspeicher gespeicherten Identifikationscodes übereinstimmt, und/oder bei in geschlossener Stellung positioniertem Verschlusselement und zur Ausgabe und/oder Weiterleitung der generierten Alarmmeldung. Im Verfahren wird entsprechend vorteilhafterweise mittels dieser Alarmeinheit bei erfolgtem Auslesen der mindestens einen Identifikationseinheit, d. h. insbesondere bei erfolgtem Auslesen des korrekten Identifikationscodes, welcher mit dem im Vergleichsspeicher gespeicherten Identifikationscode oder mit einem der im Vergleichsspeicher gespeicherten Identifikationscodes übereinstimmt, und somit bei Erfassen der Bienenkönigin im inneren Flugöffnungsbereich und/oder bei in geschlossener Stellung positioniertem Verschlusselement, insbesondere ermittelt mittels der Verschlusselementpositionserfassungseinheit, eine Alarmmeldung generiert und ausgegeben und/oder weitergeleitet. Beispielsweise wird die Alarmmeldung mit dem Verschließen der Flugöffnung, d. h. zum Beispiel nach dem Betätigen des Verschlusselementes durch die Betätigungseinheit, generiert. Die Ausgabe der Alarmmeldung kann beispielsweise optisch, beispielsweise durch ein Lichtsignal, und/oder akustisch erfolgen. Die Weiterleitung der Alarmmeldung kann, insbesondere mittels Funk, d. h. insbesondere kabellos, erfolgen, beispielsweise an ein Telefon und/oder ein anderes mobiles Gerät, insbesondere an ein Smartphone, und/oder an einen Computer, insbesondere bei einer für den Bienenstock verantwortlichen Person zuhause oder im Betrieb, und/oder in ein Netzwerk, insbesondere in eine so genannte Cloud.

Zur Sicherstellung der Korrektheit des gesamten Vorgangs wird die Alarmmeldung vorteilhafterweise erst nach eindeutiger Identifikation der Bienenkönigin, d. h. von deren Identifikationseinheit, im inneren Flugöffnungsbereich, dem Betätigen des Verschlusselementes und der Feststellung, dass sich das Verschlusselement in der geschlossenen Stellung befindet, von der Alarmeinheit generiert und ausgegeben oder weitergeleitet. Alternativ können beispielsweise zwei Alarmmeldungen generiert und ausgegeben und/oder weitergeleitet werden, beispielsweise eine erste Alarmmeldung nach eindeutiger Identifikation der Bienenkönigin, d. h. von deren Identifikationseinheit, im inneren Flugöffnungsbereich und eine weitere Alarmmeldung nach Feststellung, dass sich das Verschlusselement in der geschlossenen Stellung befindet.

Beispielsweise wird zu einem Bienenzüchter, dem der Bienenstock gehört, der Identifikationscode der Bienenkönigin, ein eindeutiger Identifikationscode der Ausleseeinheit und/oder von deren Antenneneinheit und die Information der Verschlusselementpositionserfassungseinheit bezüglich der Stellung des Verschlusselementes übertragen, insbesondere zusammen mit der Alarmmeldung oder als Bestandteil der Alarmmeldung. Diese Informationen werden beispielsweise in einem Informationssystem des Bienenzüchters mit der aktuellen Uhrzeit verknüpft.

Das Aktivieren der Betätigungseinheit zum Betätigen des Verschlusselementes, um dieses in die geschlossenen Stellung zu bewegen, wird, wie oben bereits beschrieben, vorteilhafterweise durch die Ausleseeinheit ausgelöst, wodurch ein besonders zeitnahes Verschließen der Flugöffnung nach dem Erfassen der Bienenkönigin im inneren Flugöffnungsbereich sichergestellt ist. Alternativ kann jedoch beispielsweise auch vorgesehen sein, dass die Alarmmeldung sofort nach dem Auslesen der mindestens einen Identifikationseinheit und somit sofort nach Erfassen der Bienenkönigin im inneren Flugöffnungsbereich generiert und weitergeleitet wird, so dass die Betätigungseinheit als Reaktion auf diese Alarmmeldung aktiviert werden kann, um das Verschlusselement zu betätigen und dadurch in die geschlossene Stellung zu bewegen. Ein entsprechendes Signal zum Aktivieren der Betätigungseinheit kann beispielweise analog zur Weiterleitung der Alarmmeldung übermittelt werden, beispielsweise über einen entsprechenden Rückkanal. Dieses Signal kann beispielsweise nach Empfang der Alarmmeldung automatisch oder manuell ausgelöst werden.

Erfindungsgemäß ist das Verschlusselement zum vollständigen Verschließen der Flugöffnung ausgebildet oder weist mindestens eine Durchtrittsöffnung auf, welche für die Bienenkönigin zu klein ist und für kleinere Bienen, insbesondere für Arbeiterinnen und/oder Drohnen, ausreichend groß ist. D. h. die Durchtrittsöffnung ist so klein, dass die Bienenkönigin nicht hindurch kann, und so groß, dass andere Bienen, insbesondere Arbeiterinnen und/oder Drohnen, hindurch können. Für die Dimensionierung der Durchtrittsöffnung werden beispielsweise Durchschnittsmaße von für die Bienenbeute vorgesehenen Bienen und/oder Drohnen und/oder Bienenköniginnen verwendet. Vorteilhafterweise weist das Verschlusselement mehrere solcher Durchtrittsöffnungen auf. Mittels der Durchtrittsöffnung oder mehreren Durchtrittsöffnungen wird es den kleineren Bienen ermöglicht, die Bienenbeute weiterhin betreten und verlassen zu können, auch wenn die Flugöffnung mittels des Verschlusselements teilweise, d. h. mit Ausnahme der einen oder mehreren Durchtrittsöffnungen, verschlossen ist, so dass die Bienenkönigin nicht heraus kann. Somit wird insbesondere sichergestellt, dass das restliche Bienenvolk durch das in der geschlossenen Stellung positionierte Verschlusselement nicht oder zumindest nur sehr gering beeinträchtigt wird.

In der Ausleseeinheit sind vorteilhafterweise die oben genannten Komponenten, insbesondere die Antenneneinheit, RFID-Leseelektronikeinheit, Controller, Vergleichsspeicher, Betätigungseinheit, Verschlusselementpositionserfassungseinheit, Arretiereinheit und/oder Alarmeinheit, integriert, insbesondere in dieser angeordnet oder zumindest mit dieser gekoppelt. Beispielsweise weist die Ausleseeinheit einen Energieversorgungsanschluss zur elektrischen Energieversorgung und/oder eine integrierte elektrische Energieversorgung auf. Die elektrische Energieversorgung kann beispielsweise mittels Batterie, mittels Akkumulator, mittels Anschluss an ein elektrisches Energieversorgungsnetz, mittels einer Solarzelleneinheit, mittels einer Windradeinheit und/oder mittels einer Brennstoffzelleneinheit erfolgen. Beispielsweise erfolgt die elektrische Energieversorgung durch eine Kombination einer Solarzelleneinheit und eines Akkumulators. Die Solarzellen sind dabei beispielsweise auf einem Dach der Bienenbeute angeordnet. Durch den Akkumulator, welcher durch die Solarzelleneinheit geladen wird, wird die Funktion der Vorrichtung auch bei schlechten Lichtverhältnissen sichergestellt.

Vorteilhafterweise wird ein aktueller Zustand der elektrischen Energieversorgung überwacht und Informationen hierrüber gespeichert und/oder, zumindest bei Abweichen von vorgegebenen Werten, weitergeleitet, zum Beispiel an den Imker, insbesondere mittels Funk, beispielsweise über die Verbindung, über welche auch die Alarmmeldung weitergeleitet wird. Dadurch kann auf Probleme der Energieversorgung rechtzeitig reagiert werden.

Die Vorrichtung kann zusätzlich beispielsweise zu einer Steuerung des Bienenstroms, d. h. des Zu- und/oder Abströmens der Bienen, an der Flugöffnung der Bienenbeute verwendet werden. Hierzu wird an jeder einzelnen Biene eine Identifikationseinheit, insbesondere ein RFID-Transponder, angeordnet. Die Antenneneinheit weist dann vorteilhafterweise Mehrfachantennen auf, d. h. mehrere Antennen, welche ein Erkennen der Bewegungsrichtung der jeweiligen Identifikationseinheit und somit der jeweiligen Biene ermöglichen, d. h. insbesondere ob die Bewegung in die Bienenbeute hinein oder aus dieser heraus erfolgt. Es kann dann jede Biene, insbesondere anhand ihres Identifikationscodes ihrer Identifikationseinheit, eindeutig identifiziert und die jeweilige Bewegungsrichtung bestimmt werden.

Das Verschlusselement kann dann beispielsweise derart ausgebildet und mittels der Betätigungseinheit derart betätigbar sein, dass der Bienenstrom steuerbar ist, beispielsweise durch ein zunehmendes Öffnen oder Schließen der Flugöffnung mittels des Verschlusselementes.

Zur einfachen, sicheren und optimalen Programmierung des Vergleichsspeichers der Ausleseeinheit sind verschiedene Methoden möglich. Beispielsweise umfasst die Vorrichtung zusätzlich zur als RFID-Transponder, insbesondere UHF-Transponder, ausgebildeten mindestens einen Identifikationseinheit eine so genannte Master-Card, insbesondere UHF-Master-Card. Ein Einlesen dieser Master-Card durch die Ausleseeinheit versetzt die Ausleseeinheit in einen so genannten Programmiermodus, welcher ein Anlernen der Identifikationseinheiten in den Vergleichsspeicher, ein Entfernen der Identifikationseinheiten aus dem Vergleichsspeicher und/oder ein Löschen des gesamten Vergleichsspeichers ermöglicht. Diese Vorgänge werden als TEACH IN, TEACH_OUT und CLEAR ALL bezeichnet.

Eine solche Master-Card erlaubt beispielsweise das Anlernen einer vorgegebenen Maximalanzahl von Identifikationseinheiten im Vergleichsspeicher der Ausleseeinheit. Diese vorgegebene Maximalanzahl der anlernbaren Identifikationseinheiten ist hierbei vorteilhafterweise auf der Master-Card gespeichert. Diese Art der Konfiguration des Vergleichsspeichers benötigt neben der, ohnehin vorhandenen, RFID-Schnittstelle keine zusätzlichen Kommunikationsschnittstellen an der Ausleseeinheit.

Das korrekte Anlernen der Identifikationseinheiten kann zum Beispiel optisch visualisiert werden, beispielsweise durch Lichtsignale, zum Beispiel mittels LEDs. Optional kann der Inhalt des Vergleichsspeichers über eine oder mehrere weitere Kommunikationsschnittstellen, zum Beispiel WLAN und/oder Bluetooth und/oder BLE (Bluetooth Low Energy), transportiert werden.

Alternativ oder zusätzlich erfolgt die Programmierung, insbesondere das Anlernen der Identifikationseinheiten in den Vergleichsspeicher, das Entfernen aus dem Vergleichsspeicher und/oder das Löschen des Vergleichsspeichers, beispielsweise drahtlos über BLE und mittels einer App, d. h. mittels eines Programms, auf einem Mobiltelefon, insbesondere Smartphone, oder einem anderen Mobilgerät, welches dies ermöglicht.

Alternativ oder zusätzlich erfolgt die Programmierung, insbesondere das Anlernen der Identifikationseinheiten in den Vergleichsspeicher, das Entfernen aus dem Vergleichsspeicher und/oder das Löschen des Vergleichsspeichers, beispielsweise drahtlos über WLAN und mittels einer App, d. h. mittels eines Programms, auf einem Mobiltelefon, insbesondere Smartphone, oder einem anderen Gerät, insbesondere Mobilgerät, und/oder Computer, welches dies ermöglicht.

Alternativ umfasst die Vorrichtung mindestens eine als RFID-Transponder, insbesondere UHF-Transponder, ausgebildete Identifikationseinheit und einen NFC-Transponder, vorteilhafterweise im Set und vorprogrammiert. Dies stellt eine Alternative zum Anlernen über die Master-Card dar. Der NFC-Transponder wird am Mobiltelefon, insbesondere Smartphone, oder an einem anderen Mobilgerät eingelesen und die ID-Nummer, welche der des im Set befindlichen UHF-Transponders entspricht, wird beispielsweise über BLE (Bluetooth Low Energy) in den Vergleichsspeicher übertragen.

Alternativ zur RFID-basierten Lösung, d. h. zur Ausbildung der Identifikationseinheit als RFID-Transponder und zur Ausbildung der Ausleseeinheit als RFID-Leseeinheit, sind auch andere Lösungen möglich, beispielsweise analog einem Warensicherungssystem, mit einer entsprechend ausgebildeten Identifikationseinheit und Ausleseeinheit. Hierbei wird zwar keine eindeutige Identifikation ermöglicht, aber wenn nur die Bienenkönigin oder die jeweilige Bienenkönigin eine solche Identifikationseinheit aufweist, kann ebenfalls die Anwesenheit der Bienenkönigin im inneren Flugöffnungsbereich erfasst werden.

Vorteilhafterweise weist die Vorrichtung mindestens einen Temperatursensor zur Ermittlung einer Temperatur in der Bienenbeute, insbesondere im Bienenstock, und/oder außerhalb der Bienenbeute auf. Der mindestens eine Temperatursensor ist beispielsweise in der Ausleseeinheit angeordnet oder mit dieser gekoppelt oder als ein RFID-Temperatursensortransponder ausgebildet. Dadurch kann beispielsweise sichergestellt werden, dass bei der Aktivierung der Betätigungseinheit zum Betätigen des Verschlusselementes, um es in die geschlossene Stellung zu bewegen, zusätzlich die Temperatur in der Bienenbeute, insbesondere im Bienenstock, und/oder außerhalb der Bienenbeute berücksichtigt wird. Um das Entkommen der Bienen aus der Bienenbeute bei Gefahr sicherzustellen, wird die Betätigung beispielsweise nur bei einer Temperatur in der Bienenbeute, insbesondere im Bienenstock, und/oder außerhalb der Bienenbeute unter einer vorgegebenen Maximaltemperatur aktiviert.

Die Betätigungseinheit zum Betätigen des Verschlusselementes, um dieses in die geschlossene Stellung zu bewegen, kann beispielsweise als eine Verriegelungseinheit zum Verriegeln des Verschlusselementes in der geöffneten Stellung ausgebildet sein, welche durch das Aktivieren entriegelt wird, beispielsweise umfassend einen Elektromagneten, welcher zum Verriegeln oder zum Entriegeln bestromt wird. Das Bestromen zum Entriegeln hat den Vorteil, dass keine andauernde Stromversorgung des Elektromagneten erforderlich ist, um ihn im verriegelten Zustand zu halten. Beispielsweise umfasst diese Verriegelungseinheit einen Permanentmagneten, welcher das Verschlusselement in der geöffneten Stellung verriegelt, und den Elektromagneten, welcher im bestromten Zustand dem Magnetfeld des Permanentmagneten entgegenwirkt und dieses somit kompensiert, so dass das Verschlusselement entriegelt wird. Auch andere Verriegelungen sind möglich.

Es kann dann beispielsweise vorgesehen sein, dass das Verschlusselement ausschließlich durch Schwerkraft, d. h. durch die Erdanziehung, in die geschlossene Stellung bewegt wird. Beispielsweise ist das Verschlusselement als eine Klappe ausgebildet, welche nach dem Entriegeln nach unten fällt und somit zuklappt. Alternativ oder zusätzlich kann beispielsweise mindestens ein Federelement vorgesehen sein, welches in der geöffneten Stellung des Verschlusselementes gespannt ist, so dass das Verschlusselement mittels der Federkraft des Federelementes in die geschlossene Stellung bewegt wird.

Alternativ kann die Betätigungseinheit beispielsweise als ein Motor ausgebildet sein, mittels welchem das Verschlusselement in die geschlossene Stellung bewegt wird. Dies hat den Vorteil, dass mittels des Motors das Verschlusselement auch wieder, beispielsweise automatisch oder manuell aktiviert, in die geöffnete Stellung bewegt werden kann.

Die Betätigungseinheit weist somit vorteilhafterweise einen Aktor auf, beispielsweise in Form des Motors oder des Elektromagneten, oder einen anderen Aktor, um das Verschlusselement zu betätigen, insbesondere auf die oben beschriebene Weise.

Kann während eines Betriebs der Ausleseeinheit eine Erwärmung der Ausleseeinheit oder zumindest von Komponenten der Ausleseeinheit erfolgen, ist vorteilhafterweise die Ausleseeinheit oder sind diese Komponenten derart an der Bienenbeute angeordnet, dass diese Erwärmung keinen oder zumindest nur einen geringen, insbesondere vernachlässigbaren, Einfluss auf die Temperatur im Inneren der Bienenbeute hat, um eine Beeinflussung eines Verhaltens der Bienen zu vermeiden. Beispielsweise ist die Ausleseeinheit oder sind zumindest die sich erwärmenden Komponenten zumindest teilweise außen an der Bienenbeute angeordnet und/oder es ist eine Kühlungseinrichtung und/oder eine Wärmeabführungseinrichtung zum Abführen der Wärme der Ausleseeinheit oder der sich erwärmenden Komponenten nach außen, d. h. an die äußere Umgebung der Bienenbeute, vorgesehen.

Vorteilhafterweise ist die Antenneneinheit durch eine oder mehrere weitere Antennen, insbesondere RFID-Antennen, erweiterbar, beispielsweise durch eine Ansteckmöglichkeit in der Antenneneinheit und entsprechend ansteckbare Antennen. Diese weitere Antenne oder weitere Antennen können beispielsweise zur Positionsbestimmung der Königin oder Königinnen in der Bienenbeute, insbesondere im Bienenstock, und/oder zum Auslesen eines oder mehrerer Sensortransponder, insbesondere Temperatursensortransponder, verwendet werden.

Beispielsweise kann die Vorrichtung einen oder mehrere Sensortransponder aufweisen, welche durch die Ausleseeinheit auslesbar sind. Mittels solcher Sensortransponder kann beispielsweise die Temperatur in der Bienenbeute, insbesondere im Bienenstock, und/oder außerhalb der Bienenbeute, eine relative Luftfeuchtigkeit innerhalb und/oder außerhalb der Bienenbeute, insbesondere des Bienenstocks, und/oder Lichtverhältnisse innerhalb und/oder außerhalb der Bienenbeute, insbesondere des Bienenstocks, und/oder ein oder mehrere Ereignisse, beispielsweise ein Öffnen der Bienenbeute, ermittelt und beispielsweise auch aufgezeichnet und/oder weitergeleitet werden, beispielsweise in Form einer entsprechenden Alarmmeldung.

Die Vorrichtung, insbesondere die Ausleseeinheit, kann beispielsweise eine oder mehrere Datenschnittstellen aufweisen, insbesondere zum Programmieren und/oder Auslesen von Informationen, insbesondere zusätzlich zur ohnehin vorhandenen RFID-Schnittstelle bei der Ausbildung als RFID-Leseeinheit, beispielsweise einen USB-Abschluss und/oder eine BLE-Schnittstelle und/oder eine NFC-Schnittstelle, beispielsweise zur Verbindung mit einem Smartphone oder einem anderen Gerät. Vorteilhafterweise ist auch eine entsprechende Anwendungssoftware vorgesehen.

Vorteilhafterweise ist die Vorrichtung modular ausgebildet, so dass beispielsweise in Form eines Grundmoduls mit einer Grundfunktion, welches mit einem oder mehreren weiteren Modulen kombiniert werden kann und/oder bei welchem eine oder mehrere weitere Funktionen installiert und/oder freigeschaltet werden können.

Die Vorrichtung ist insbesondere zum Einsatz für Imker vorgesehen, kann jedoch beispielsweise, alternativ oder zusätzlich, auch für eine Bienenverhaltensforschung verwendet werden, beispielsweise zur Untersuchung, wann die Bienen schwärmen, und zur Untersuchung von Vorzeichen hierfür.

Die insbesondere als RFID-Transponder ausgebildete Identifikationseinheit weist beispielsweise ein Gewicht von weniger als fünf Milligramm und/oder eine Größe von maximal 2 mm x 2 mm auf, beispielsweise eine Länge von maximal 1,7 mm, eine Breite von maximal 1,7 mm und eine Höhe von maximal 0,6 mm. Der RFID-Transponder arbeitet beispielsweise bei einer Frequenz von 900 MHz oder zumindest ca. 900 MHz (UHF).

Ausführungsbeispiele der Erfindung werden im Folgenden anhand von Zeichnungen näher erläutert.

### Darin zeigen:

- Figur 1: schematisch eine perspektivische Darstellung einer Ausführungsform einer Bienenbeute für einen Bienenstock,
- Figur 2: schematisch eine Seitenansicht einer Bienenkönigin,
- Figur 3: schematisch eine perspektivische Darstellung eines Flugöffnungsbereichs einer weiteren Ausführungsform einer Bienenbeute für einen Bienenstock,
- Figur 4: schematisch eine perspektivische Darstellung der Ausführungsform der Bienenbeute für den Bienenstock mit dem Flugöffnungsbereich aus Figur 3,
- Figur 5: schematisch eine Schnittdarstellung eines Flugöffnungsbereichs einer weiteren Ausführungsform einer Bienenbeute für einen Bienenstock,
- Figur 6: schematisch eine perspektivische Darstellung des Flugöffnungsbereichs aus Figur 5 mit einem Verschlusselement in einer geöffneten Stellung,
- Figur 7: schematisch eine perspektivische Darstellung des Flugöffnungsbereichs aus Figur 5 mit dem Verschlusselement in einer geschlossenen Stellung, und
- Figur 8: schematisch eine Vorrichtung zur Steuerung einer Flugöffnung einer Bienenbeute für einen Bienenstocks.

Einander entsprechende Teile sind in allen Figuren mit den gleichen Bezugszeichen versehen.

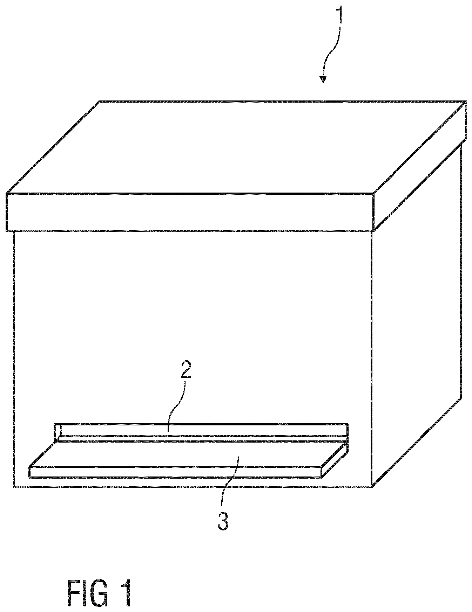

Figur 1 zeigt eine Bienenbeute 1 für einen Bienenstock. Als Bienenbeute 1 wird dabei eine künstliche Behausung für ein Bienenvolk bezeichnet, während der Bienenstock die Gesamtheit aus Bienenbeute 1 und darin befindlichem Bienenvolk bezeichnet.

Im Inneren der hier dargestellten Bienenbeute 1 befinden sich, hier nicht näher dargestellt, beispielsweise Bienenwaben und das Bienenvolk.

Die Bienenbeute 1 weist eine Flugöffnung 2 auf, durch welche hindurch Bienen des Bienenstocks die Bienenbeute 1 betreten und verlassen können. An einer Außenseite der Bienenbeute 1 ist unterhalb der Flugöffnung 2 ein Anflugplatz 3 für die Bienen angeordnet.

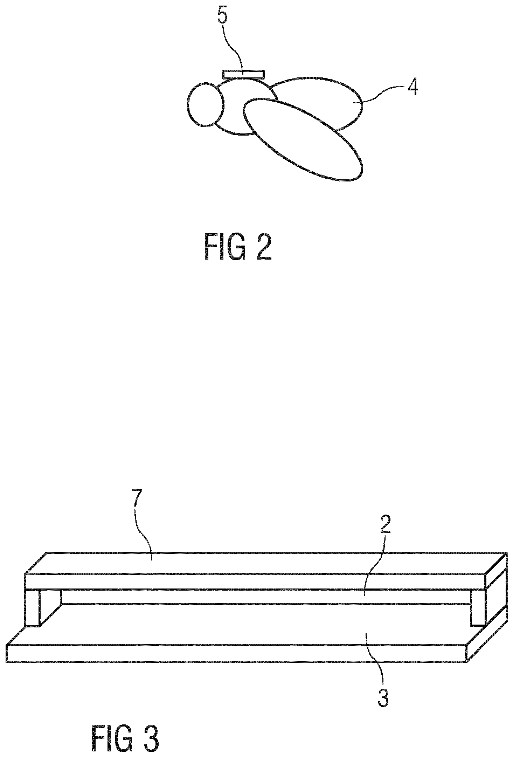

Figur 2 zeigt eine Bienenkönigin 4 des Bienenstocks, d. h. des Bienenvolks, in der Bienenbeute 1. Die Bienenkönigin 4 weist eine als ein RFID-Transponder ausgebildete Identifikationseinheit 5 auf, welche beispielsweise mittels Klebstoff an der Bienenkönigin 4 befestigt ist.

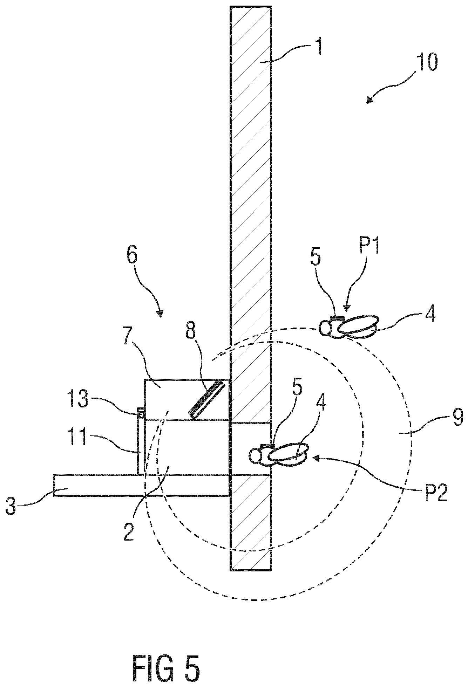

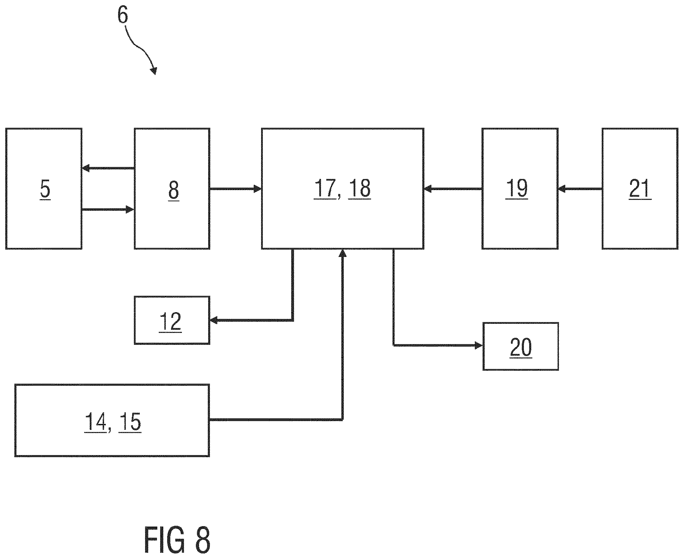

Die Identifikationseinheit ist ein Bestandteil einer in Figur 5 und Figur 8 dargestellten Vorrichtung 6 zur Steuerung der Flugöffnung 2 der Bienenbeute 1 des Bienenstocks. Mittels dieser Vorrichtung 6 wird es ermöglicht, die Bienenkönigin 4 am Verlassen der Bienenbeute 1 zu hindern, so dass die Vorrichtung 6 in Verbindung mit der Bienenbeute 1 eine Bienenköniginnenfalle bildet.

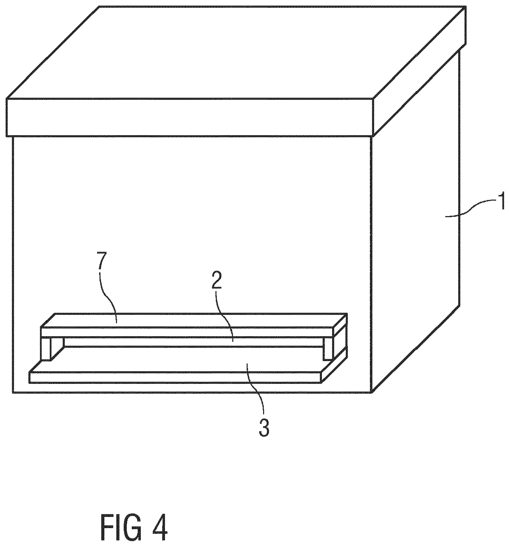

Um dies zu ermöglichen, umfasst die Vorrichtung 6, wie in Figur 3 dargestellt, eine als RFID-Leseeinheit ausgebildete Ausleseeinheit 7 zum Auslesen der mindestens einen Identifikationseinheit 5, welche im dargestellten Beispiel an der Flugöffnung 2 angeordnet ist. Figur 4 zeigt die Bienenbeute 1 mit der Ausleseeinheit 7. Die Ausleseeinheit 7 ist hier oberhalb der Flugöffnung 2 an der Bienenbeute 1 angeordnet.

Figur 5 zeigt eine Schnittdarstellung der Bienenbeute 1 im Bereich der Flugöffnung 2. Hier ist zu erkennen, dass die Ausleseeinheit 7 eine als eine RFID-Antenneneinheit ausgebildete Antenneneinheit 8 mit mindestens einer als eine RFID-Antenne ausgebildeten Antenne aufweist. Diese Antenneneinheit 8 der Ausleseeinheit 7 ist derart ausgerichtet, dass sich ein mittels gestrichelter Linien umrahmter Erfassungsbereich 9 der Antenneneinheit 8 auf einen inneren Flugöffnungsbereich, d. h. auf einen Umgebungsbereich der Flugöffnung 2 im Inneren, d. h. in einem Innenraum 10, der Bienenbeute 1, erstreckt. Dadurch wird es ermöglicht, die Identifikationseinheit 5 mittels der Ausleseeinheit 7 zu erfassen und auszulesen, wenn sich die Bienenkönigin 4 von innen, d. h. im Innenraum 10 der Bienenbeute 1, der Flugöffnung 2 nähert, wie durch die in einer ersten Position P1 dargestellte Bienenkönigin 4 gezeigt. Es kann somit auf diese Weise die Annäherung der Bienenkönigin 4 von innen an die Flugöffnung 2 erfasst werden.

Um nun zu verhindern, dass die Bienenkönigin 4 die Bienenbeute 1 verlässt, beispielsweise um zu verhindern, dass sie unkontrolliert außerhalb der Bienenbeute 1 einen neuen Bienenstock aufbaut, weist die Vorrichtung 6 ein Verschlusselement 11 zum zumindest teilweisen Verschließen der Flugöffnung 2 auf. Dieses Verschlusselement 11 ist hier als eine Verschlussklappe ausgebildet, welche um eine Schwenkachse 13 aus der offenen Stellung in die in Figur 5 dargestellte geschlossene Stellung schwenkt.

Zum Betätigen des Verschlusselementes 11, um es in eine in Figur 5 dargestellte geschlossene Stellung zu bewegen, in welcher es die Flugöffnung 2 zumindest teilweise verschließt, weist die Vorrichtung 6 eine Betätigungseinheit 12 auf, welche vorteilhafterweise mit der Ausleseeinheit 7 gekoppelt ist, beispielsweise in die Ausleseeinheit 7 integriert ist. Die Betätigungseinheit 12 kann beispielsweise als ein Aktor ausgebildet sein oder einen solchen umfassen, beispielsweise einen Elektromotor. Dadurch kann das Verschlusselement 10 mittels der Betätigungseinheit 12 beispielsweise sowohl in die geschlossene Stellung als auch zurück in die geöffnete Stellung bewegt werden.

Alternativ kann beispielsweise vorgesehen sein, dass die Betätigungseinheit 12 als eine Verriegelungseinheit ausgebildet ist, welche das Verschlusselement 11 in der geöffneten Stellung verriegelt und es betätigt, indem es das Verschlusselement 11 entriegelt, wobei das Verschlusselement 11 sich dann von selbst, insbesondere durch die Schwerkraft, d. h. durch die Erdanziehung, in die geschlossene Stellung bewegt, insbesondere bei der hier dargestellten Ausbildung als Klappe, und/oder beispielsweise mittels Federkraft mindestens eines gespannten Federelementes in die geschlossene Stellung bewegt wird.

Somit wird, wenn sich die Bienenkönigin 4 aus dem Inneren der Bienenbeute 1 in Richtung der Flugöffnung 2 bewegt und den Erfassungsbereich 9 erreicht, die Identifikationseinheit 5 mittels der Ausleseeinheit 7 ausgelesen und somit die Bienenkönigin 4 identifiziert und erkannt, dass sie sich in Richtung der Flugöffnung 2 bewegt. Daraufhin wird die Betätigungseinheit 12 aktiviert, welche das Verschlusselement 11 betätigt und somit in die geschlossene Stellung bewegt, entweder durch aktives Bewegen oder zumindest durch Entriegeln mittels der Betätigungseinheit 12. Das Verschlusselement 11 hat, wie in Figur 5 gezeigt, die geschlossene Stellung erreicht und somit die Flugöffnung 2 für die Bienenkönigin 4 verschlossen, bevor sich die Bienenkönigin 4 durch die Flugöffnung 2 hindurchbewegt hat, wie in Figur 5 durch die sich nun in einer zweiten Position P2 in der Flugöffnung 2 befindende Bienenkönigin 4 gezeigt.

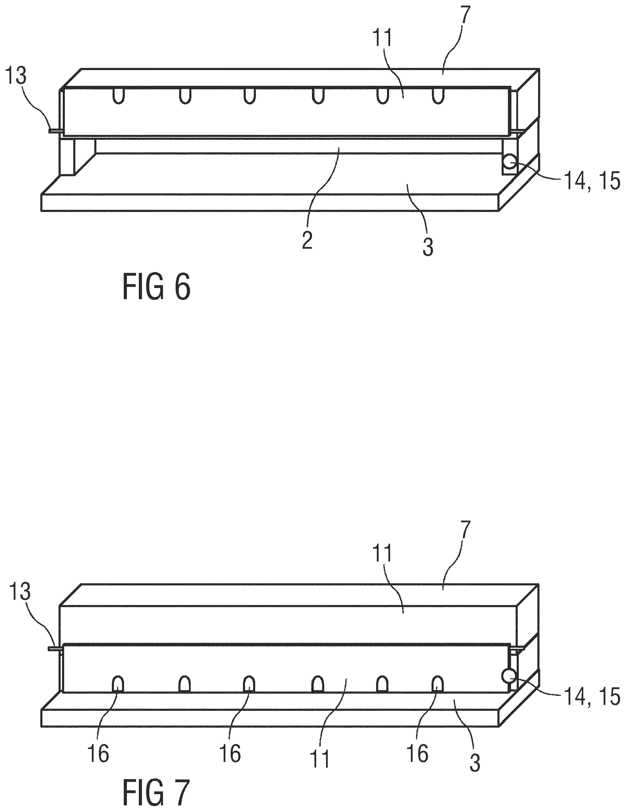

Figur 6 zeigt das Verschlusselement 11 in der geöffneten Stellung. Figur 7 zeigt das Verschlusselement 11 in der geschlossenen Stellung.

Die Vorrichtung 6 umfasst im dargestellten Beispiel des Weiteren eine Arretiereinheit 14 zur Arretierung des Verschlusselements 11 in der geschlossenen Stellung und eine Verschlusselementpositionserfassungseinheit 15 zur Erfassung der Position des Verschlusselementes 11, mittels welcher zumindest ermittelbar ist, ob sich das Verschlusselement 11 in der geschlossenen Stellung befindet oder nicht. Im dargestellten Beispiel sind die Arretiereinheit 14 und die Verschlusselementpositionserfassungseinheit 15 als eine gemeinsame Einheit ausgebildet. Sie können in anderen Beispielen jedoch auch als getrennte eigenständige Einheiten ausgebildet sein.

Das Verschlusselement 11 weist mindestens eine Durchtrittsöffnung 16 auf, welche für die Bienenkönigin 4 zu klein ist und für kleinere Bienen, insbesondere für Arbeiterinnen und/oder Drohnen, ausreichend groß ist. Im dargestellten Beispiel weist das Verschlusselement 11 mehrere solche Durchtrittsöffnungen 16 auf. Dadurch wird sichergestellt, dass auch im durch das Verschlusselement 11, mit Ausnahme der Durchtrittsöffnungen 16, verschlossenen Zustand der Flugöffnung 2 die kleinere Bienen, insbesondere die Arbeiterinnen und/oder Drohnen, die Bienenbeute 1 weiterhin betreten und verlassen können.

Figur 8 zeigt die Vorrichtung 6 mit ihren Komponenten. Wie bereits beschrieben, umfasst die Vorrichtung 6 die Identifikationseinheit 5 und die Ausleseeinheit 7. Die Ausleseeinheit 7 umfasst mindestens die Antenneneinheit 8 mit mindestens einer RFID-Antenne, eine RFID-Leseelektronikeinheit 17 und einen Controller 18, insbesondere zur Signalaufbereitung.

Die Vorrichtung 6 umfasst zudem einen Vergleichsspeicher 19, in welchem ein oder mehrere Identifikationscodes von einer oder mehreren zu erkennenden Identifikationseinheiten 5 gespeichert sind, die beispielsweise als Aktor ausgebildete Betätigungseinheit 12, die beispielsweise als ein Sensor ausgebildete Verschlusselementpositionserfassungseinheit 15, eine Alarmeinheit 20, auch als Alarm- und Informationseinheit bezeichnet, zur Generierung einer Alarmmeldung bei erfolgtem, insbesondere erfolgreichen, Auslesen der mindestens einen Identifikationseinheit 5, d. h. insbesondere bei erfolgtem Auslesen des korrekten Identifikationscodes, welcher mit dem im Vergleichsspeicher 19 gespeicherten Identifikationscode oder mit einem der im Vergleichsspeicher 19 gespeicherten Identifikationscodes übereinstimmt, und/oder bei in geschlossener Stellung positioniertem Verschlusselement 11 und zur Ausgabe und/oder Weiterleitung der generierten Alarmmeldung. Zudem umfasst die Vorrichtung 6 im dargestellten Beispiel eine kontaktlose Programmierelektronik 21.

Beispielsweise sind die oben genannten Komponenten, insbesondere die Antenneneinheit 8, RFID-Leseelektronikeinheit 17, Controller 18, Vergleichsspeicher 19, Betätigungseinheit 12, Verschlusselementpositionserfassungseinheit 15, Arretiereinheit 14 und/oder Alarmeinheit 20, in der Ausleseeinheit 7 integriert, insbesondere in dieser angeordnet oder zumindest mit dieser gekoppelt. Die Programmierelektronik 21 kann beispielsweise in der Auswerteeinheit 7 intergierte und/oder externe Bestandteile aufweisen.

In einem Verfahren zur Steuerung der Flugöffnung 2 der Bienenbeute 1, insbesondere mittels dieser Vorrichtung 6, wird mittels der an der Flugöffnung 2 angeordneten Ausleseeinheit 7 die an der Bienenkönigin 4 angeordnete Identifikationseinheit 5 ausgelesen. Dies ist nur möglich, wenn sich die Bienenkönigin 4 im Inneren, d. h. im Innenraum 10, der Bienenbeute 1 im Umgebungsbereich der Flugöffnung 2 und somit im Erfassungsbereich 9 der Ausleseeinheit 7 befindet. Durch dieses Auslesen der Identifikationseinheit 5 wird somit ermittelt, dass sich die Bienenkönigin 4 im Inneren der Bienenbeute 1 im Umgebungsbereich der Flugöffnung 2 befindet und somit die Gefahr besteht, dass die Bienenkönigin 4 die Bienenbeute 1 verlässt. Daraufhin wird das Verschlusselement 11 durch Betätigen mittels des Betätigungselementes 12 in die geschlossene Stellung bewegt, wodurch verhindert wird, dass die Bienenkönigin 4 die Bienenbeute 1 verlässt. Das Aktivieren des Betätigungselementes 12 und somit das Betätigen und dadurch Bewegen des Verschlusselementes 11 in die geschlossene Stellung wird dabei vorteilhafterweise durch die Ausleseeinheit 7 ausgelöst, welche hierzu vorteilhafterweise mit dem Betätigungselement 12 gekoppelt ist, wie oben bereits beschrieben.

Der Identifikationscode der Bienenkönigin 4 oder der jeweilige Identifikationscode der jeweiligen Bienenkönigin 4, genauer gesagt von deren jeweiliger als RFID-Transponder ausgebildeten Identifikationseinheit 5, ist in der Ausleseeinheit 7 gespeichert, insbesondere im Vergleichsspeicher 19. Dadurch wird bei einer sich im inneren Flugöffnungsbereich befindenden erfassten und ausgelesenen als RFID-Transponder ausgebildeten Identifikationseinheit 5 innerhalb einer sehr kurzen Zeit von beispielsweise wenigen Millisekunden ein Vergleich mit dem gespeicherten Identifikationscode oder mit den gespeicherten Identifikationscodes ermöglicht, wodurch die jeweilige Bienenkönigin 4 und deren Anwesenheit im inneren Flugöffnungsbereich entsprechend schnell erfasst werden kann.

Nach dem Bewegen des Verschlusselementes 11 in die geschlossene Stellung wird es mittels der Arretiereinheit 14 arretiert und mittels der Verschlusselementpositionserfassungseinheit 15 wird ermittelt, dass sich das Verschlusselement 11 in der geschlossenen Stellung befindet. Nun wird mittels der Alarmeinheit 20 eine Alarmmeldung generiert und beispielsweise in optischer Form, zum Beispiel mittels LEDs (Licht emittierenden Dioden), und/oder in akustischer Form ausgegeben und/oder weitergeleitet.

Zu Sicherstellung der Korrektheit des gesamte Vorgangs wird die Alarmmeldung vorteilhafterweise erst nach eindeutiger Identifikation der Bienenkönigin 4, d. h. von deren Identifikationseinheit 5, im inneren Flugöffnungsbereich, dem Betätigen des Verschlusselementes 11 und der Feststellung, dass sich das Verschlusselement 11 in der geschlossenen Stellung befindet, von der Alarmeinheit 20 generiert und ausgegeben oder weitergeleitet. Alternativ können beispielsweise zwei Alarmmeldungen generiert und ausgegeben und/oder weitergeleitet werden, beispielsweise eine erste Alarmmeldung nach eindeutiger Identifikation der Bienenkönigin 4, d. h. von deren Identifikationseinheit 5, im inneren Flugöffnungsbereich und eine weitere Alarmmeldung nach Feststellung, dass sich das Verschlusselement 11 in der geschlossenen Stellung befindet.

Beispielsweise wird zu einem Bienenzüchter, dem der Bienenstock gehört, der Identifikationscode der Bienenkönigin 4, ein eindeutiger Identifikationscode der Ausleseeinheit 7 und/oder von deren Antenneneinheit 8 und die Information der Verschlusselementpositionserfassungseinheit 15 bezüglich der Stellung des Verschlusselementes 11 übertragen, insbesondere zusammen mit der Alarmmeldung oder als Bestandteil der Alarmmeldung. Diese Informationen werden beispielsweise in einem Informationssystem des Bienenzüchters mit der aktuellen Uhrzeit verknüpft.

Die Ausleseeinheit 7 weist beispielsweise einen Energieversorgungsanschluss zur elektrischen Energieversorgung und/oder eine integrierte elektrische Energieversorgung auf. Die elektrische Energieversorgung kann beispielsweise mittels Batterie, mittels Akkumulator, mittels Anschluss an ein elektrisches Energieversorgungsnetz, mittels einer Solarzelleneinheit, mittels einer Windradeinheit und/oder mittels einer Brennstoffzelleneinheit erfolgen. Beispielsweise erfolgt die elektrische Energieversorgung durch eine Kombination einer Solarzelleneinheit und eines Akkumulators. Die Solarzellen sind dabei beispielsweise auf einem Dach der Bienenbeute 1 angeordnet. Durch den Akkumulator, welcher durch die Solarzelleneinheit geladen wird, wird die Funktion der Vorrichtung 6 auch bei schlechten Lichtverhältnissen sichergestellt.

Vorteilhafterweise wird ein aktueller Zustand der elektrischen Energieversorgung überwacht und Informationen hierrüber gespeichert und/oder, zumindest bei Abweichen von vorgegebenen Werten, weitergeleitet, zum Beispiel an den Imker, insbesondere mittels Funk, beispielsweise über die Verbindung, über welche auch die Alarmmeldung weitergeleitet wird. Dadurch kann auf Probleme der Energieversorgung rechtzeitig reagiert werden.

Zur einfachen, sicheren und optimalen Programmierung des Vergleichsspeichers 19 der Ausleseeinheit 7, insbesondere mittels der Programmierelektronik 21, sind verschiedene Methoden möglich.

Beispielsweise umfasst die Vorrichtung 6 zusätzlich zur als RFID-Transponder, insbesondere UHF-Transponder, ausgebildeten mindestens einen Identifikationseinheit 5 eine so genannte Master-Card, insbesondere UHF-Master-Card. Ein Einlesen dieser Master-Card durch die Ausleseeinheit 7 versetzt die Ausleseeinheit 7 in einen so genannten Programmiermodus, welcher ein Anlernen der Identifikationseinheiten in den Vergleichsspeicher 19, ein Entfernen der Identifikationseinheiten 5 aus dem Vergleichsspeicher 19 und/oder ein Löschen des gesamten Vergleichsspeichers 19 ermöglicht. Diese Vorgänge werden als TEACH_IN, TEACH_OUT und CLEAR ALL bezeichnet.

Eine solche Master-Card erlaubt beispielsweise das Anlernen einer vorgegebenen Maximalanzahl von Identifikationseinheiten 5 im Vergleichsspeicher 19 der Ausleseeinheit 7. Diese vorgegebene Maximalanzahl der anlernbaren Identifikationseinheiten 5 ist hierbei vorteilhafterweise auf der Master-Card gespeichert. Diese Art der Konfiguration des Vergleichsspeichers 19 benötigt neben der, ohnehin vorhandenen, RFID-Schnittstelle keine zusätzlichen Kommunikationsschnittstellen an der Ausleseeinheit 7.

Das korrekte Anlernen der Identifikationseinheiten 5 kann beispielsweise optisch visualisiert werden, beispielsweise durch Lichtsignale, zum Beispiel mittels LEDs. Optional kann der Inhalt des Vergleichsspeichers 19 über eine oder mehrere weitere Kommunikationsschnittstellen, zum Beispiel WLAN und/oder Bluetooth und/oder BLE (Bluetooth Low Energy), transportiert werden.

Alternativ oder zusätzlich erfolgt die Programmierung, insbesondere das Anlernen der Identifikationseinheiten 5 in den Vergleichsspeicher 19, das Entfernen aus dem Vergleichsspeicher 19 und/oder das Löschen des Vergleichsspeichers 19, beispielsweise drahtlos über BLE und mittels einer App, d. h. mittels eines Programms, auf einem Mobiltelefon, insbesondere Smartphone, oder einem anderen Mobilgerät, welches dies ermöglicht.

Alternativ oder zusätzlich erfolgt die Programmierung, insbesondere das Anlernen der Identifikationseinheiten 5 in den Vergleichsspeicher 19, das Entfernen aus dem Vergleichsspeicher 19 und/oder das Löschen des Vergleichsspeichers 19, beispielsweise drahtlos über WLAN und mittels einer App, d. h. mittels eines Programms, auf einem Mobiltelefon, insbesondere Smartphone, oder einem anderen Gerät, insbesondere Mobilgerät, und/oder Computer, welches dies ermöglicht.

Alternativ umfasst die Vorrichtung 6 mindestens eine als RFID-Transponder insbesondere UHF-Transponder, ausgebildete Identifikationseinheit 5 und einen NFC-Transponder, vorteilhafterweise im Set und vorprogrammiert.

### BEZUGSZEICHENLISTE

- 1: Bienenbeute
- 2: Flugöffnung
- 3: Anflugplatz
- 4: Bienenkönigin
- 5: Identifikationseinheit
- 6: Vorrichtung
- 7: Ausleseeinheit
- 8: Antenneneinheit
- 9: Erfassungsbereich
- 10: Innenraum
- 11: Verschlusselement
- 12: Betätigungseinheit
- 13: Schwenkachse
- 14: Arretiereinheit
- 15: Verschlusselementpositionserfassungseinheit
- 16: Durchtrittsöffnung
- 17: RFID-Leseelektronikeinheit
- 18: Controller
- 19: Vergleichsspeicher
- 20: Alarmeinheit
- 21: Programmierelektronik

- P1: erste Position
- P2: zweite Position

## Patentansprüche

1. Vorrichtung (6) zur Steuerung einer Flugöffnung (2) einer Bienenbeute (1) eines Bienenstocks, umfassend ein Verschlusselement (11) zum zumindest teilweisen Verschließen der Flugöffnung (2),
**gekennzeichnet durch**
- mindestens eine an einer Bienenkönigin (4) anordbare oder angeordnete Identifikationseinheit (5),
- eine Ausleseeinheit (7) zum Auslesen der mindestens einen Identifikationseinheit (5), wobei die Ausleseeinheit (7) oder zumindest eine Antenneneinheit (8) der Ausleseeinheit (7) an der Flugöffnung (2) anordbar oder angeordnet ist, und
- eine Betätigungseinheit (12) zum Betätigen des Verschlusselementes (11), welche mit der Ausleseeinheit (7) gekoppelt ist,
wobei das Verschlusselement (11) zum vollständigen Verschließen der Flugöffnung (2) ausgebildet ist oder mindestens eine Durchtrittsöffnung (16) aufweist, welche für die Bienenkönigin (4) zu klein ist und für kleinere Bienen, insbesondere für Arbeiterinnen und/oder Drohnen, ausreichend groß ist.

2. Vorrichtung (6) nach Anspruch 1,
**dadurch gekennzeichnet, dass** die mindestens eine Identifikationseinheit (5) als ein RFID-Transponder ausgebildet ist und die Ausleseeinheit (7) als eine RFID-Leseeinheit ausgebildet ist.

3. Vorrichtung nach einem der vorhergehenden Ansprüche,
**dadurch gekennzeichnet, dass** die Ausleseeinheit (7) einen Vergleichsspeicher (19) aufweist oder mit einem solchen gekoppelt ist, wobei im Vergleichsspeicher (19) ein Identifikationscode mindestens einer Identifikationseinheit (5) speicherbar oder gespeichert ist.

4. Vorrichtung (6) nach einem der vorhergehenden Ansprüche,
**dadurch gekennzeichnet, dass** die Antenneneinheit (8) der Ausleseeinheit (7) derart ausrichtbar oder ausgerichtet ist, dass sich ein Erfassungsbereich (9) der Antenneneinheit (8) auf einen Umgebungsbereich der Flugöffnung (2) im Inneren der Bienenbeute (1) erstreckt.

5. Vorrichtung nach Anspruch 4,
**dadurch gekennzeichnet, dass** die Antenneneinheit (8) mindestens zwei Antennen aufweist, welche derart ausrichtbar oder ausgerichtet sind, dass die Erfassungsbereiche (9) der Antennen einen unterschiedlichen Abstand zur Flugöffnung (2) im Inneren der Bienenbeute (1) aufweisen.

6. Vorrichtung (6) nach einem der vorhergehenden Ansprüche,
**gekennzeichnet durch** eine Arretiereinheit (14) zur Arretierung des Verschlusselements (11) in einer geschlossenen Stellung.

7. Vorrichtung (6) nach einem der vorhergehenden Ansprüche,
**gekennzeichnet durch** eine Verschlusselementpositionserfassungseinheit (15).

8. Vorrichtung (6) nach einem der vorhergehenden Ansprüche,
**gekennzeichnet durch** eine Alarmeinheit (20) zur Generierung einer Alarmmeldung bei erfolgtem Auslesen der mindestens einen Identifikationseinheit (5) und/oder bei in geschlossener Stellung positioniertem Verschlusselement (11) und zur Ausgabe und/oder Weiterleitung der generierten Alarmmeldung.

9. Verfahren zur Steuerung einer Flugöffnung (2) einer Bienenbeute (1) mittels einer Vorrichtung (6) nach einem der vorhergehenden Ansprüche, wobei mittels der Ausleseeinheit (7) die an der Bienenkönigin (4) angeordnete Identifikationseinheit (5) ausgelesen wird, wenn sich diese Bienenkönigin (4) im Inneren der Bienenbeute (1) im Umgebungsbereich der Flugöffnung (2) befindet, und daraufhin das Verschlusselement (11) durch Betätigen mittels des Betätigungselementes (12) in die geschlossene Stellung bewegt wird.

10. Verfahren nach Anspruch 9,
**dadurch gekennzeichnet, dass** das Verschlusselement (11) erst dann durch Betätigen mittels des Betätigungselementes (12) in die geschlossene Stellung bewegt wird, wenn die an der Bienenkönigin (4) angeordnete Identifikationseinheit (5) zuerst mittels der Antenne ausgelesen wird, deren Erfassungsbereich den größeren Abstand zur Flugöffnung (2) aufweist, und danach mittels der Antenne ausgelesen wird, deren Erfassungsbereich den kleineren Abstand zur Flugöffnung (2) aufweist.

11. Verfahren nach Anspruch 9 oder 10,
**dadurch gekennzeichnet, dass** ein aus der Identifikationseinheit (5) ausgelesener Identifikationscode mit einem oder mehreren im Vergleichsspeicher (19) gespeicherten Identifikationscodes verglichen wird, wobei ein erfolgreiches Auslesen der Identifikationseinheit (5), welches zum Bewegen des Verschlusselementes (11) in die geschlossene Stellung durch Betätigen mittels des Betätigungselementes (12) führt, dann vorliegt, wenn der aus der Identifikationseinheit (5) ausgelesene Identifikationscode mit dem im Vergleichsspeicher (19) gespeicherten Identifikationscode oder mit einem der im Vergleichsspeicher (19) gespeicherten Identifikationscodes übereinstimmt.

12. Verfahren nach einem der Ansprüche 9 bis 11,
**dadurch gekennzeichnet, dass** das Verschlusselement (11) in der geschlossenen Stellung mittels der Arretiereinheit (14) arretiert wird.

13. Verfahren nach einem der Ansprüche 9 bis 12,
**dadurch gekennzeichnet, dass** mittels der Verschlusselementpositionserfassungseinheit (15) erfasst wird, wenn sich das Verschlusselement (11) in der geschlossenen Stellung befindet.

14. Verfahren nach einen der Ansprüche 9 bis 13,
**dadurch gekennzeichnet, dass** mittels der Alarmeinheit (20) bei erfolgtem Auslesen der mindestens einen Identifikationseinheit (5) und/oder bei in geschlossener Stellung positioniertem Verschlusselement (11) eine Alarmmeldung generiert wird und ausgegeben und/oder weitergeleitet wird.

## Claims

1. Device (6) for controlling a flight opening (2) of a beehive (1) of a bee colony, comprising a closure element (11) for at least partially closing the flight opening (2),
**characterized by**
- at least one identification unit (5) that is arrangeable or arranged on a queen bee (4),
- a reading unit (7) for reading the at least one identification unit (5), wherein the reading unit (7) or at least an antenna unit (8) of the reading unit (7) is arrangeable or arranged at the flight opening (2), and
- an actuating unit (12) for actuating the closure element (11), said actuating unit (12) being coupled to the reading unit (7),
wherein the closure element (11) is designed to completely close the flight opening (2) or has at least one passage opening (16) which is too small for the queen bee (4) and is large enough for smaller bees, in particular for workers and/or drones.

2. Device (6) according to Claim 1,
**characterized in that** the at least one identification unit (5) is designed as an RFID transponder and the reading unit (7) is designed as an RFID reader unit.

3. Device according to either of the preceding claims, **characterized in that** the reading unit (7) has a comparator memory (19) or is coupled to such a comparator memory, wherein an identification code of at least one identification unit (5) is storable or stored in the comparator memory (19).

4. Device (6) according to any of the preceding claims, **characterized in that** the antenna unit (8) of the reading unit (7) is orientable or oriented in such a way that a detection region (9) of the antenna unit (8) extends to a region surrounding the flight opening (2) in the interior of the beehive (1).

5. Device according to Claim 4,
**characterized in that** the antenna unit (8) has at least two antennas which are orientable or oriented in such a way that the detection regions (9) of the antennas are at different distances from the flight opening (2) in the interior of the beehive (1).

6. Device (6) according to any of the preceding claims, **characterized by** a locking unit (14) for locking the closure element (11) in a closed position.

7. Device (6) according to any of the preceding claims, **characterized by** a closure element position detection unit (15).

8. Device (6) according to any of the preceding claims, **characterized by** an alarm unit (20) for generating an alarm message when the at least one identification unit (5) is read and/or when the closure element (11) is positioned in the closed position and for outputting and/or forwarding the generated alarm message.

9. Method for controlling a flight opening (2) of a beehive (1) by means of a device (6) according to any of the preceding claims, wherein the identification unit (5) arranged on the queen bee (4) is read by means of the reading unit (7) when the said queen bee (4) is in the region surrounding the flight opening (2) in the interior of the beehive (1), and the closure element (11) is then moved to the closed position by actuation by means of the actuating element (12).

10. Method according to Claim 9,
**characterized in that** the closure element (11) is moved to the closed position by actuation by means of the actuating element (12) only when the identification unit (5) arranged on the queen bee (4) is first read by means of that antenna of which the detection region is at the greater distance from the flight opening (2), and is then read by means of that antenna of which the detection region is at the shorter distance from the flight opening (2) .

11. Method according to Claim 9 or 10,
**characterized in that** an identification code read from the identification unit (5) is compared with one or more identification codes stored in the comparator memory (19), wherein successful reading of the identification unit (5), which leads to the movement of the closure element (11) to the closed position by actuation by means of the actuating element (12), takes place when the identification code read from the identification unit (5) corresponds to the identification code stored in the comparator memory (19) or to one of the identification codes stored in the comparator memory (19).

12. Method according to any of Claims 9 to 11, **characterized in that** the closure element (11) is locked in the closed position by means of the locking unit (14).

13. Method according to any of Claims 9 to 12, **characterized in that** the closure element position detection unit (15) detects when the closure element (11) is in the closed position.

14. Method according to any of Claims 9 to 13, **characterized in that** an alarm message is generated and is output and/or forwarded by means of the alarm unit (20) when the at least one identification unit (5) is read and/or when the closure element (11) is positioned in the closed position.

## Revendications

1. Dispositif (6) permettant de commander une ouverture de vol (2) d'une ruche (1) d'un rucher, comprenant un élément de fermeture (11) destiné à fermer au moins partiellement l'ouverture de vol (2),
**caractérisé par**
- au moins une unité d'identification (5) qui peut être ou est disposée sur une reine des abeilles (4),
- une unité de lecture (7) destinée à lire ladite au moins une unité d'identification (5), dans lequel l'unité de lecture (7) ou du moins une unité d'antenne (8) de l'unité de lecture (7) peut être ou est disposée au niveau de l'ouverture de vol (2), et
- une unité d'actionnement (12) destinée à actionner l'élément de fermeture (11) et qui est couplée à l'unité de lecture (7),
dans lequel l'élément de fermeture (11) est réalisé pour fermer entièrement l'ouverture de vol (2) ou présente au moins une ouverture de passage (16) qui est trop petite pour la reine des abeilles (4) et est suffisante ou trop grande pour des abeilles plus petites, en particulier pour les abeilles ouvrières et/ou les faux bourdons.

2. Dispositif (6) selon la revendication 1, **caractérisé en ce que** ladite au moins une unité d'identification (5) est réalisée comme un transpondeur RFID et l'unité de lecture (7) est réalisée comme une unité de lecture RFID.

3. Dispositif selon l'une quelconque des revendications précédentes, **caractérisé en ce que** l'unité de lecture (7) présente ou est couplée à une mémoire de comparaison (19), dans lequel un code d'identification d'au moins une unité d'identification (5) peut être ou est stocké dans la mémoire de comparaison (19).

4. Dispositif (6) selon l'une quelconque des revendications précédentes, **caractérisé en ce que** l'unité d'antenne (8) de l'unité de lecture (7) peut être ou est alignée de telle sorte qu'une zone de détection (9) de l'unité d'antenne (8) s'étend sur une zone environnante de l'ouverture de vol (2) à l'intérieur de la ruche (1).

5. Dispositif selon la revendication 4, **caractérisé en ce que** l'unité d'antenne (8) présente au moins deux antennes qui peuvent être ou sont alignées de telle sorte que les zones de détection (9) des antennes présentent une distance différente par rapport à l'ouverture de vol (2) à l'intérieur de la ruche (1).

6. Dispositif (6) selon l'une quelconque des revendications précédentes, **caractérisé par** une unité de blocage (14) destinée à bloquer l'élément de fermeture (11) dans une position fermée.

7. Dispositif (6) selon l'une quelconque des revendications précédentes, **caractérisé par** une unité de détection (15) de la position de l'élément de fermeture.

8. Dispositif (6) selon l'une quelconque des revendications précédentes, **caractérisé par** une unité d'alarme (20) pour générer un message d'alarme lorsque la lecture de ladite au moins une unité d'identification (5) a été effectuée et/ou lorsque l'élément de fermeture (11) est positionné dans la position fermée, et/ou pour sortir et/ou la retransmettre le message d'alarme généré.

9. Procédé permettant de commander une ouverture de vol (2) d'une ruche (1) au moyen d'un dispositif (6) selon l'une quelconque des revendications précédentes, dans lequel l'unité de lecture (7) permet de lire l'unité d'identification (5) disposée sur la reine des abeilles (4) lorsque cette reine des abeilles (4) se trouve à l'intérieur de la ruche (1) dans la zone environnante de l'ouverture de vol (2), et permet ensuite de déplacer l'élément de fermeture (11) dans la position fermée par un actionnement au moyen de l'élément d'actionnement (12).

10. Procédé selon la revendication 9, **caractérisé en ce que** l'élément de fermeture (11) n'est déplacé dans la position fermée au moyen de l'élément d'actionnement (12) que lorsque l'unité d'identification (5) disposée sur la reine des abeilles (4) est d'abord lue au moyen de l'antenne dont la zone de détection présente une plus grande distance par rapport à l'ouverture de vol (2), et est ensuite lue au moyen de l'antenne dont la zone de détection présente une plus petite distance par rapport à l'ouverture de vol (2).

11. Procédé selon la revendication 9 ou 10, **caractérisé en ce qu'**un code d'identification lu à partir de l'unité d'identification (5) est comparé avec un ou plusieurs codes d'identification stockés dans la mémoire de comparaison (19), dans lequel une lecture réussie de l'unité d'identification (5) qui entraîne le déplacement de l'élément de fermeture (11) dans la position fermée par un actionnement au moyen de l'élément d'actionnement (12) est avérée si le code d'identification lu à partir de l'unité d'identification (5) coïncide avec le code d'identification stocké dans la mémoire de comparaison (19) ou avec l'un des codes d'identification stockés dans la mémoire de comparaison (19).

12. Procédé selon l'une quelconque des revendications 9 à 11, **caractérisé en ce que** l'élément de fermeture (11) est bloqué dans la position fermée au moyen de l'unité de blocage (14).

13. Procédé selon l'une quelconque des revendications 9 à 12, **caractérisé en ce que** l'unité de détection (15) de la position de l'élément de fermeture détecte quand l'élément de fermeture (11) se trouve dans la position fermée.

14. Procédé selon l'une quelconque des revendications 9 à 13, **caractérisé en ce que**, lorsque la lecture de ladite au moins une unité d'identification (5) a été effectuée et/ou lorsque l'élément de fermeture (11) est positionné dans la position fermée, l'unité d'alarme (20) génère et sort ou retransmet un message d'alarme.
